# EUROPEAN PATENT APPLICATION

(11) **EP 1 760 384 A2**
(43) Date of publication of application: **07.03.2007**
(21) Application number: 06253543.0
(22) Date of filing: 06.07.2006
(51) Int. Cl.: F16L 37/244, F16L 37/252

(54) **Method for joining parts fabricated via selective laser sintering while maintaining proper alignment**

(30) Priority: 06.09.2005 US 220097
(71) Applicant: NORTHROP GRUMMAN CORPORATION, Los Angeles, CA 90067-2199 (US)
(72) Inventor: Husmann, Christopher H., Gardena California 90249 (US); Stein, Gregory N., Moreno Valley California 92557 (US)
(74) Representative: Mackenzie, Andrew Bryan

(57) **Abstract**

Mating air ducts may be joined to each other via an integrally formed protrusion on male air duct and an integrally formed groove on a female air duct for effecting linear and angular alignment of the mating air ducts. The integrally formed protrusion and groove may be formed on the air ducts via a process known as selective laser sintering or stereo lithography. Further, more than one groove and protrusion may be formed on the air ducts in an uneven manner such that the protrusions fit within the grooves in only one angular orientation. The protrusion may be a nub or a thread. Also, the groove may be a channel aligned to a central axis of the female air duct or a helical groove. The male air duct is linearly aligned and/or angularly aligned to the female air duct when the protrusion engages a distal portion of the groove or an abrupt change of the groove.

## Description

### CROSS-REFERENCE TO RELATED APPLICATIONS

Not Applicable

### STATEMENT RE: FEDERALLY SPONSORED RESEARCH/DEVELOPMENT

Not Applicable

### BACKGROUND OF THE INVENTION

The present invention relates to a method and apparatus for joining parts by integrally forming the joining device with the parts to be joined and to a method and apparatus for simultaneously joining and angularly and linearly aligning two parts together.

Pipe systems are used in many different applications. For example, buildings have a pipe system for its heating, ventilation and air conditioning system. Automobiles have pipes that regulate the flow of air from the environment into the interior of the automobile. Airplanes have complex pipe systems for hydraulic controls, pneumatic controls and for controlling the environment of the cabin.

In each of the above mentioned pipe systems, the pipes may be routed through the building, automobile or airplane via elbows, Ts, reducers, expanders and the like joined by sleeves and other pipe connecting mechanisms. The pipes and pipe connecting mechanisms must be assembled within the pipe system at a proper angular rotation and at a proper linear displacement with respect to each adjacent pipe within the pipe system such that pipes systems may fit within the application. To this end, an assembler or maintenance personnel must take great care in ensuring that the pipes and pipe connectors are aligned to each other both linearly and angularly to ensure that the pipe system is properly assembled.

For example, the assembler or maintenance personnel must custom fit each pipe and pipe connector to match a blue print. Unfortunately, the time to custom fit each pipe and pipe connector may be time consuming. Also, the assembler may misread the blue print thereby incorrectly assembling the pipe system.

Accordingly, there is a need in the art for an improved method for joining two pipes within a pipe system.

### BRIEF SUMMARY OF THE INVENTION

The present invention addresses the above-described deficiencies as well as other deficiencies associated with the prior art. In an aspect of the present invention, a male pipe having an integrally formed thread may be joined to a female pipe having an integrally formed groove wherein the thread and groove are integrally formed with the male pipe and the female pipe, respectively, via selective laser sintering. This reduces the time to initially assemble the pipe system in which the male pipe and the female pipe are a part of because threads do not have to be formed on the male and female pipes during assembly.

In another aspect of the present invention, the thread and groove are integrally formed on the male pipe and the female pipe, respectively, such that a proximal portion of the thread contacts a distal portion of the groove when the male pipe is fully engaged to the female pipe. Additionally, the proximal portion of the thread of the male pipe may have a box configuration, and the groove distal portion may have a corresponding box configuration such that the thread proximal portion bumps into the groove distal portion when the male pipe is fully engaged to the female pipe. At this point, the pipes are fully engaged to each other and the male pipe can no longer advance into the female pipe. At the fully engaged position, the pipes are aligned with respect to each other in regards to their relative angular displacement and relative linear displacement.

In another aspect of the present invention, male pipe may have two or more threads integrally formed thereon, and the female pipe may have two or more grooves integrally formed thereon which correspond to the male pipe threads. Moreover, the threads and grooves may be unevenly distributed about the outer and inner periphery of the pipes. For example, two threads may be formed on the male pipe at about 45 degrees or at about 90 degrees apart from each other. In this way, there is only one correct angular orientation to thread the male pipe onto the female pipe.

In another aspect of the present invention, external surfaces of the male pipe and the female pipe may have an integrally formed alignment indices. These alignment indices are aligned with each other only when the male pipe is fully engaged to the female pipe in the proper angular orientation.

In another aspect of the present invention, a male pipe may be integrally formed with a nub, and a female pipe may be integrally formed with a groove wherein the nub is slideable within the groove. The groove, at its proximal and medial portions, may be aligned to the central axis of the pipe, and at its distal portion, be bent at an angle between about 1 degree to about 90 degrees. Accordingly, the nub may be slide into the groove along the central axis of the female pipe until the nub contacts the bend near the distal portion of the groove. At this point, the relative linear relationship of the male pipe to the female pipe is correct. Thereafter, the male pipe may be rotated such that the nub slides into the distal portion of the groove. At this point, the male pipe is fully engaged to the female pipe, and the relative angular displacement between the male pipe and the female pipe is correct.

In another aspect of the present invention, the exterior surfaces of the male and female pipes may have integrally formed indices which are aligned when the male pipe is fully engaged to the female pipe. Also, multiple nubs and grooves may be integrally formed on the male pipe and the female pipe, respectively, to strength the engagement between the male pipe and the female pipe. Moreover, to ensure proper angular orientation between the male pipe and the female pipe when multiple nubs and grooves are formed on the male pipe and the female pipe, the nubs may be unevenly distributed about the periphery of the male pipe, and grooves corresponding to such nubs may be integrally formed in the female pipe.

### BRIEF DESCRIPTION OF THE DRAWINGS

These as well as other features of the present invention will become more apparent upon reference to the drawings wherein:
Figure 1 is a perspective view of a first embodiment of a male pipe and a female pipe wherein threads are integrally formed with the male pipe and the female pipe via selective laser sintering;
Figure 2 is a cross section of the female pipe shown in Figure 1 illustrating two grooves integrally formed on the female pipe;
Figure 3 is a front view of the male pipe shown in Figure 2 illustrating two threads integrally formed on the male pipe being threadable onto the two grooves;
Figure 4 is a flow chart of a selective laser sintering process;
Figure 5 is a pictorial illustration of the selective laser sintering process;
Figure 6 is a cross section of one of the two grooves shown in Figure 2 illustrating a box configuration at a distal portion of such groove;
Figure 7 is a rear view of one of the two threads shown in Figure 3 illustrating a corresponding box configuration as the groove distal portion at a proximate portion of such thread;
Figure 8 is a perspective view of a second embodiment of a male pipe and a female pipe wherein a nub is integrally formed with the male pipe and a groove is integrally formed with the female pipe via selective laser sintering;
Figure 9 is a front view of the male pipe and the female pipe illustrated in Figure 8;
Figure 10 is a side view of the female pipe shown in Figure 9; and
Figure 11 is a side view of the male pipe shown in Figure 9.

### DETAILED DESCRIPTION OF THE INVENTION

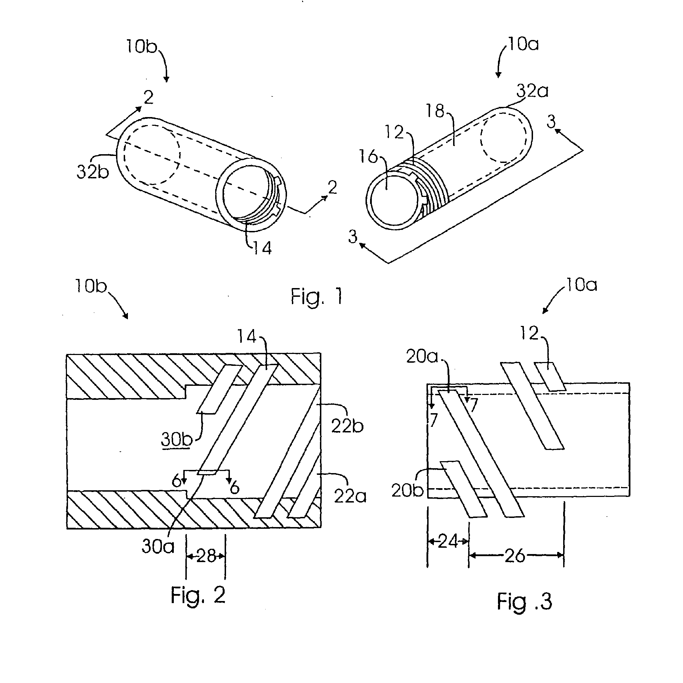

The drawings referred to herein are for the purposes of illustrating the various aspects of the present invention and are not meant to limit the scope of the present invention. Figure 1 illustrates a perspective view of two pipes, a male pipe 10a and a female pipe 10b which may be joined together via mating threads 12 (see Figures 1 and 3) and grooves 14 (see Figures 1 and 2) integrally formed on the pipes 10a, b. Also, the male and female pipes 10a, b may be axially and angularly aligned when male pipe 10a is fully engaged onto the female pipe 10b. Each pipe 10a, b and their respective threads 12 and grooves 14 may be fabricated from a unitary material in that the threads 12 and grooves 14 may be integrally formed with the male pipe 10a and the female pipe 10b, respectively. By way of example and not limitation, the pipes 10a, b and the various aspects of the pipe (e.g., threads 12 and grooves 14) may be integrally formed by a process known as selective laser sintering, stereo lithography or the like.

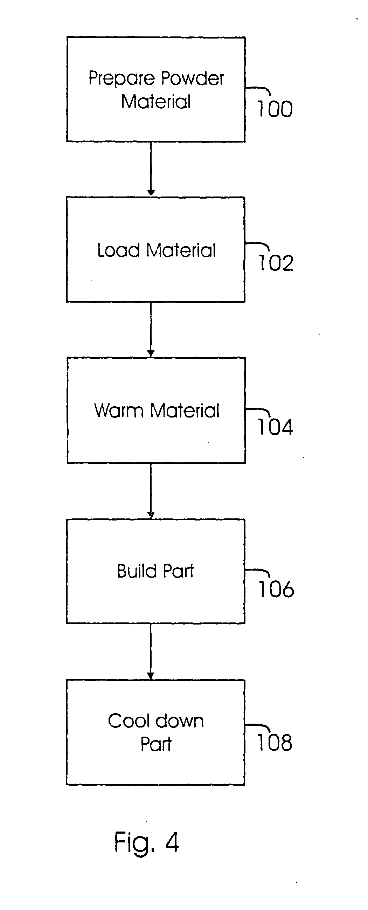

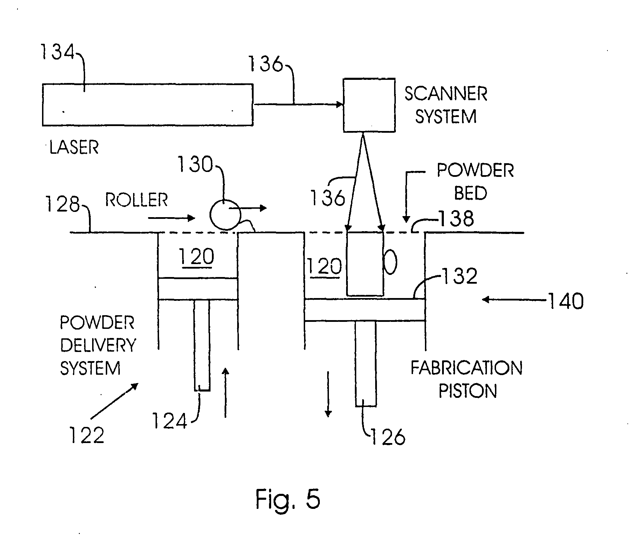

Referring now to Figure 4 which is a flowchart of the selective laser sintering process, selective laser sintering encompasses the steps of preparing a powder material 100, loading the powder material into a laser sintering machine 102, warming up the powder material 104, building the pipe 106, and cooling down the pipe 108. Referring now to Figure 5 which is a pictorial diagram of the selective laser sintering process, the powder material 120 which may comprise Nylon 12 is prepared and disposed within the powder delivery system 122. At the initial state, the delivery piston 124 is at a lowered position, and a fabrication piston 126 is at a raised position. The delivery piston 124 is raised incrementally to raise the powder level above a bed 128 of the powder delivery system 122. A roller 130 sweeps across the powder delivery system bed 128 to push a layer of the powder material 120 onto the upper surface 132 of the fabrication piston 126. The laser 134 emits a laser beam 136 which traces a pattern over the surface 138 (i.e., powder bed) of the powder material 120 received onto the fabrication piston 126. The pattern may be a two dimensional cross section of the pipe 10a or 10b. The laser beam 136 selectively melts and bonds the powder material 120 together. As the above mentioned steps are repeatedly performed, the delivery piston 124 is raised and the fabrication piston 126 is lowered to receive additional powder material 120. The pipe 10a or 10b may be built via one cross section at a time on the fabrication piston 126. Additionally, protrusions (e.g., threads 12) of the female pipe 10b may be supported within the fabrication system 140 via the non-melted and non-burned powder material 120 on the fabrication piston 126.

As shown in Figure 1, the male pipe 10a may have a cylindrical configuration defining an inner cylindrical surface 16 and an outer cylindrical surface 18. Although the male pipe 10a depicted in Figure 1 is straight, it is also contemplated that the various aspects of the present invention discussed herein may be employed and practiced with pipes having different configurations such as angled, reducing, expanding, or the like. These pipes having different configurations may also be fabricated via selective laser sintering or the like.

The male pipe 10a may have at least one thread 12 formed on its outer cylindrical surface 18. As shown in Figure 1, two threads 12 are formed on the outer cylindrical surface 18 of the male pipe 10a. The threads 12 may mate with or be sized and configured to the grooves 14 formed on the female pipe 10b. As such, the male pipe 10a may be inserted into or penetrate the female pipe 10b as the threads 12 integrally formed on the male pipe 10a are engaged to the grooves 14 integrally formed on the female pipe 10b. By way of example, proximate portions 20a, 20b of the threads 12 integrally formed on the male pipe 10a may be inserted into proximate portions 22a, 22b of the threads 12 formed on the female pipe 10b. The male pipe 10a may be rotated in a clockwise direction to engage the threads 12 into the grooves 14. As the threads 12 and grooves 14 are engaged to each other, the male pipe 10a penetrates deeper into the female pipe 10b.

It is contemplated within the scope of the present invention that the male pipe 10a may be engaged to the female pipe 10b by hand. In particular, the threads 12 integrally formed on the male pipe 10a may be sized and configured to the grooves 14 integrally formed on the female pipe 10b such that the frictional forces between the threads 12 and grooves 14 are less than a torque createable by a human hand. Alternatively, the grooves 14 and threads 12 may be slightly deformed such that a wrench or other tool is required to twist the male pipe 10a into engagement with the female pipe 10b. By way of example and not limitation, it is contemplated within the scope of the present invention that the mating surfaces of the threads 12 and grooves 14 be pitted to create additional frictional forces between the threads 12 and grooves 14.

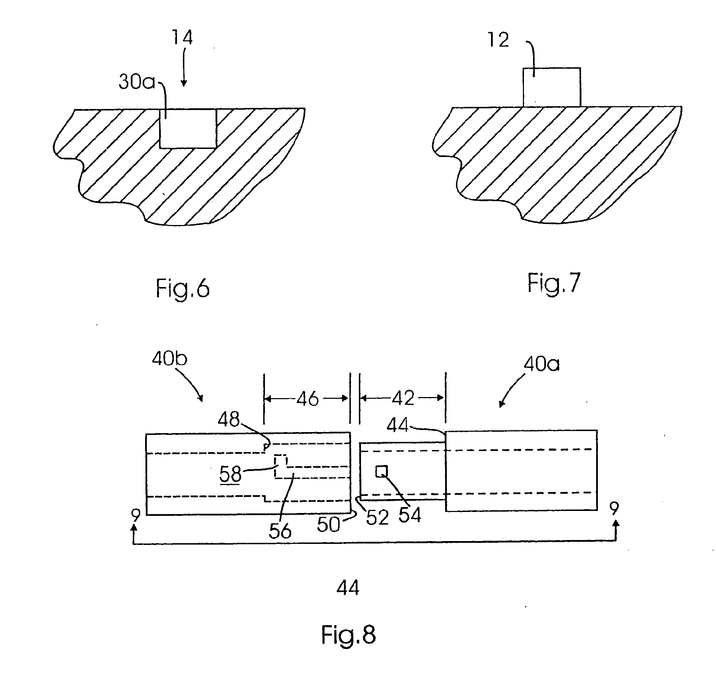

In Figures 1 and 3, the threads 12 are shown as having an overall helical configuration which starts at a proximal portion 24 of the male pipe 10a and terminates at a medial portion 26 of the male pipe 10a. Moreover, even though the threads 12 may be right handed threads, it is also contemplated within the scope of the present invention that the various aspects of the present invention discussed herein may be employed with left handed threads. Figures 6 and 7 illustrate that the threads 12 (see Figure 7) and grooves 14 (see Figure 6) may have a square or rectangular cross section. However, the threads 12 and grooves 14 may be formed on the pipes 10a, 10b having a configuration conforming to the American standard taper pipe thread, American standard straight pipe thread, or a type of thread profile or cross section appropriate for the part.

Figures 1-3 illustrate two threads 12 integrally formed on the male pipe 10a and two grooves 14 integrally formed on the female pipe 10b. However, it is also contemplated within the scope of the present invention that only one thread 12 may be integrally formed on the male pipe 10a and only one groove 14 may be integrally formed on the female pipe 10b. However, to increase the strength of the engagement between the threads 12 and grooves 14, additional threads 12 and grooves 14 may be formed on the male and female pipes 10a, b.

As stated above, the threads 12 formed on the male pipe 10a terminate at the medial portion 26 of the male pipe 10a. Likewise, the groove 14 formed on the female pipe 10b may terminate at a medial portion 28 of the female pipe 10b. Further, the linear lengths of the threads 12 and grooves 14 formed on the male and female pipes 10a, b may be equal to each other. By way of example and not limitation, as shown in Figures 2 and 3, the threads 12 and grooves 14 extend about the pipes 10a, b one revolution. Accordingly, when the proximate portion 20a, b of the thread 12 integrally formed on the male pipe 10a contacts distal portions 30a, b of the groove 14 integrally formed on the female pipe 10b, the male pipe 10a may no longer be inserted into the female pipe 10b. As such, the linear displacement of the male pipe 10a into the female pipe 10b may be controlled by selective formation of the distal portion 30a, b of the grooves 14. If deeper or shallow penetration of the male pipe 10a into the female pipe 10b is desired, then linear lengths of the grooves 14 should be increased or decreased, respectively.

As shown in Figures 2 and 6, the distal portion 30a, b of the grooves 14 formed on the female pipe 10b may have an abrupt change. In particular, the distal portions 30a, b of the grooves 14 formed on the female pipe 10b may have a box channel configuration, although other configurations are also contemplated within the scope of the present invention. Likewise, the proximate portions 20a, b of the threads 12 formed on the male pipe 10a may be sized and configured to mate with the distal portions 30a, b of the grooves 14 formed on the female pipe 10b. In this way, when the proximal portions 20a, b and distal portions 30a, b contact each other, the male pipe 10a stops rotating into the female pipe 10b. Accordingly, the relative angular location of the male pipe 10a with respect to the female pipe 10b may be controlled by selective formation of the distal portions 30a, b of the grooves 14 on the female pipe 10b.

In certain situations, the angular displacement of the male pipe 10a to the female pipe 10b should be fixed. For example, the male pipe 10a and the female pipe 10b may typically be a part of an overall pipe system. In the pipe system, the male pipe 10a and the female pipe 10b are connected to each other but may also be connected to other pipes within the pipe system. To this end, the distal ends 32a, b (see Figure 1) of the pipes 10a, b may have reducers, expanders, elbows and the like attached thereto. As such, to fit the male pipe 10a and the female pipe 10b into the pipe system, the male pipe 10a may be designed to be angularly and linearly displaced to the female pipe 10b at a set/fixed angle (e.g., about 45 degrees and about 90 degrees) and set/fixed distance. To this end, the male pipe 10a and the female pipe 10b may each be fabricated with only a single thread 12 and single groove 14 such that the male pipe thread 12 engages the female pipe groove 14 at a certain angle, and rotation of the male pipe 10a with respect to the female pipe 10b ends when the proximate portion 20 of the thread 12 and distal portion 30 of the groove 14 contact each other. At this point, the male pipe 10a is fully engaged to the female pipe 10b.

As discussed above, the strength of the engagement between the threads 12 of the male pipe 10a and the grooves 14 of the female pipe 10b may be increased by integrally forming additional threads 12 and grooves 14 on the male pipe 10a and the female pipe 10b. For example, the male pipe 10a may be formed with two or more threads 12, and the female pipe 10b may be formed with a corresponding number of grooves 14. However, in this instance, the threads 12 integrally formed on the male pipe 10a may engage any of the grooves 14 integrally formed on the female pipe 10b. As such, the male pipe 10a when fully engaged to the female pipe 10b may not be in the correct angular orientation. For example, if two threads 12 are formed on the male pipe 10a separated by 180 degrees from each other, then there are two possible angular displacements between the male pipe 10a and the female pipe lOb, namely, 0 degrees and 180 degrees. To alleviate this problem, the threads 12 may be integrally formed on the male pipe 10a in an uneven manner. For example, the threads 12 may be 45 degrees apart from each other, as shown in Figure 1. Further, the female pipe 14 may have integrally formed grooves 14 which correspond to the integrally formed threads 12.

In another aspect of the present invention, Figure 8 also illustrates a male pipe 40a and a female pipe 40b. The male pipe 40a may have a cylindrical configuration defining an engagement portion 42 and a shoulder 44. The engagement portion 42 engages the female pipe 40b. Optionally, the shoulder 44 may provide a stop for the male pipe 40a when it is being inserted into the female pipe 40b. In particular, the female pipe 40b may have a cylindrical configuration defining an engagement portion 46 and a shoulder 48. The engagement portion 46 of the female pipe 40b engages the engagement portion 42 of the male pipe 40a when the male pipe 40a is inserted into the female pipe 40b, and a proximate edge 50 of the female pipe 40b contacts the shoulder 44. Also, optionally, a proximate edge 52 of the male pipe 40a may contact the shoulder 48 of the female pipe 40b to limit the insertion distance of the male pipe 40a into the female pipe 40b. The shoulders 44, 48 and proximate edges 50, 52 may control the linear displacement of the male pipe 40a into the female pipe 40b.

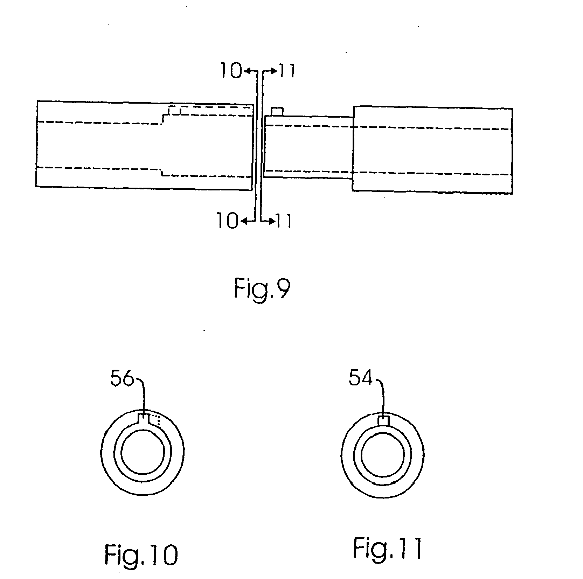

The male pipe 40a may have an integrally formed nub 54 formed on its engagement portion 42. The nub 54 may protrude outward from the engagement portion 42 of the male pipe 40a, as shown in Figures 9 and 11. The nub 54 may be sized and configured to be received into a groove 56 (see Figure 8) integrally formed within the engagement portion 46 of the female pipe 40b. As shown in Figures 8 and 9, the engagement portion 42 of the male pipe 40a may slide into and through the engagement portion 46 of the female pipe 40b when the nub 54 is aligned to the groove 56 and slides toward a distal portion 58 of the groove 54. At the distal portion 58 of the groove 56, there is an abrupt change in direction such that male pipe 40a may be rotated clockwise relative to the female pipe 40b such that the assembler or maintenance personnel may confirm that the male pipe 40a has fully engaged the female pipe 40b. The abrupt change, as shown in Figure 8, is a ninety degree bend upward. When the male pipe 40a is fully engaged to the female pipe 40b, both the relative linear displacement and the relative angular displacement between the male pipe 40a and the female pipe 40b are correct.

The nub 54 may be integrally formed with the male pipe 40a via selective laser sintering, and the groove 56 may be integrally formed with the female pipe 40b via selective laser sintering. The process of selective laser sintering is more fully discussed above and may be employed when fabricating the male pipe 40a with an integrally formed nub 54 and the female pipe 40b with an integrally formed groove 56. Moreover, the male pipe 40a and/or the female pipe 40b may be fabricated from material such as nylon 12, glass filled nylon, polystyrene, and the like.

As stated above, the nub 54 and groove 56 may be sized and configured such that the nub 54 may slide through the groove 56 by hand. For example, there may be a clearance fit between the nub 54 and the groove 56. Alternatively, the nub 54 and groove 56 may have a friction fit such that insertion of the male pipe 40a into the female pipe 40b requires a mallet or the like. For a friction fit, the exterior surface of the nub 54 and the interior surface of the groove 56 may be pitted such that there is an interference fit between the nub 54 and the groove 56. As such, when the male pipe's engagement portion 42 is inserted into the female pipe's engagement portion 46, the pitts on the respective nub 54 and groove 56 interferes with each other so as to cause friction therebetween such that a mallet is required for insertion of the male pipe 40a into the female pipe 40b.

The nub as shown in Figures 8, 9 and 11 may have a square configuration. However, it is also contemplated within the scope of the present invention that the nub 54 may have a cylindrical configuration or other configuration.

Both embodiments of the present invention discussed herein are useful for ensuring that the relative linear displacement of the male pipe 40a into the female pipe 40b is correct when the male pipe 10a, 40a is fully engaged to the female pipe 10b, 40b. Also, both embodiments are useful for ensuring that the relative angular displacement of the male pipe 10a, 40a with respect to the female pipe 10b,40b is correct when the male pipe 10a, 40a is fully engaged to the female pipe 10b,40b. For example, maintenance personnel or assembler can insert the male pipe 10a of the threaded embodiment into the female pipe 10b and thread the male pipe 10a onto the female pipe 10b. When the male pipe 10a is fully engaged to the female pipe 10b, then the relative linear displacement and relative angular displacement between the pipes 10a, b are correct. This is confirmed because the male pipe is no longer threadable onto the female pipe. Additionally, for the nub 54 and groove 56 embodiment, maintenance personnel or assembler may insert the male pipe 40a into the female pipe 40b then twist the male pipe 40a with respect to the female pipe 40b to fully engage the male and female pipes 40a, b. When the male pipe 40a is fully engaged to the female pipe 40b, then the relative linear displacement and the relative angular displacement between the pipes 40a, b are correct. This is confirmed because the nub 54 of the male pipe 40a has been twisted into the groove 56 of the female pipe 40b.

To further provide maintenance personnel assurance that the male pipe 10a, 40a and female pipe 10b, 40b are fully engaged, alignment indices may be placed on the male pipe 10a, 40a and the female pipes 10b, 40b which are aligned together only when the male pipe 10a, 40a is fully engaged to the female pipe 10b, 40b in proper angular displacement and linear displacement. For example, the male pipe 10a, 40a may have a mark (e.g., printed, integrally formed indentation, integrally formed protrusion) on its exterior surface which is aligned to a corresponding mark (e.g., printed, integrally formed indentation, integrally formed protrusion) located on the exterior surface of the female pipe 10b, 40b only when the male pipe 10a, 40a is fully engaged to the female pipe 10b, 40b.

Additional modifications and improvements of the present invention may also be apparent to those of ordinary skill in the art. Thus, the particular combination of parts and steps described and illustrated herein are intended to represent only certain embodiments of the present invention, and is not intended to serve as limitations of alternative devices or methods within the spirit and scope of the invention.

## Claims

1. A method of effecting linear alignment of mating air ducts, the method comprising the steps of:
a) fabricating a first air duct having a groove integrally formed on an inner surface of the first air duct, the groove defining a distal portion;
b) fabricating a second air duct insertable into the first air duct, a protrusion integrally formed on an outer surface of the second air duct, the protrusion being mateable with the groove when the second air duct is inserted into the first air duct; and
c) mating the protrusion with the groove until the protrusion engages the distal portion for linearly aligning the second air duct with respect to the first air duct.

2. The method of Claim 1 wherein the first air duct is angularly aligned to the second air duct when the protrusion engages the distal portion.

3. The method of Claim 1 wherein the groove is a helical groove and the mating step comprises the step of rotating the protrusion through the helical groove.

4. The method of Claim 13 wherein the protrusion is a helical thread and the mating step comprises the step of rotating the helical thread through the helical groove.

5. The method of Claim 1 wherein the protrusion has a square configuration and the groove distal portion has a corresponding recessed square configuration.

6. The method of Claim 1 further comprising the step of rotating the second tube within the first tube to insert the protrusion into an abrupt change of the groove for angularly aligning the second tube with respect to the first tube.

7. The method of Claim 1 wherein the mating step comprises the step of inserting the protrusion into the groove.

8. An air duct assembly for effecting linear alignment of mating air ducts, the air duct assembly comprising:
a) a first air duct having a groove formed on an inner surface of the first air duct, the groove defining a distal portion, the first air duct and the groove being integrally formed; and
b) a second air duct insertable into the first air duct, a protrusion formed on an outer surface of the second air duct, the protrusion being mateable with the groove when the second air duct is engaged to the first air duct, the second air duct and the protrusion being integrally formed;
c) wherein the first air duct is linearly aligned to the second air duct when the second air duct is engaged to the first air duct and the protrusion is engaged to the distal portion.

9. The assembly of Claim 8 wherein the first air duct is angularly aligned to the second air duct when the protrusion is engaged to the distal portion.

10. The system of Claim 8 wherein the protrusion is a post extending radially outward from the second air duct.

11. The system of Claim 10 wherein the groove extends from a proximate edge of the first air duct in a linear configuration.

12. The system of Claim 8 wherein the first and second air ducts are fabricated from a material used in selective laser sintering.

13. The system of Claim 8 wherein the groove has a helical configuration.

14. The system of Claim 13 further comprising at least two helical grooves integrally formed on the first air duct inner surface and a corresponding number of protrusions on the second air duct outer surface.

15. The system of Claim 14 wherein the grooves are spaced apart unevenly for effecting proper angular orientation of the first and second air ducts.

16. The system of Claim 8 wherein the first and second air ducts are fabricated from a material used in selective laser sintering.

17. The system of Claim 16 wherein the material used in selective laser sintering is nylon 12.

18. The system of Claim 8 wherein the distal portion has an abrupt change, and the first air duct is angularly aligned to the second air duct when the protrusion is engaged to the abrupt change.
